# EUROPÄISCHE PATENTANMELDUNG

(11) **EP 0 829 553 A1**
(43) Veröffentlichungstag der Anmeldung: **18.03.1998**
(21) Anmeldenummer: 97115334.1
(22) Anmeldetag: 04.09.1997
(51) Int. Cl.: C22F 3/00, B23H 1/00

(54) **Verfahren und Vorrichtung zur Modifizierung von metallischen Werkstückoberflächen durch elektrische Entladungen**

(30) Priorität: 13.09.1996 DE 19637513
(71) Anmelder: FRAUNHOFER-GESELLSCHAFT ZUR FÖRDERUNG DER ANGEWANDTEN FORSCHUNG E.V., 80636 München (DE)
(72) Erfinder: Siemroth, Peter, Dr., 01099 Dresden (DE); Schultrich, Bernd, Dr., 01257 Dresden (DE); Kleinert, Horst, Prof. Dr. Dr., 01458 Ottendorf-Okrilla (DE); Grosser, Sven, 01477 Amsdorf (DE)
(74) Vertreter: Rauschenbach, Marion, Dipl.-Ing.

(57) **Zusammenfassung**

Die Erfindung bezieht sich auf den Maschinenbaus und betrifft ein Verfahren und eine Vorrichtung, wie es z.B. als Prozeßstufe vor einem adhäsiven Fügen eingesetzt werden kann.

Die Aufgabe der Erfindung besteht darin, ein Verfahren und eine Vorrichtung anzugeben, durch das die Modifizierung ohne den Einsatz von umweltschädlichen Stoffen erfolgt.

Die Aufgabe wird erfindungsgemäß gelöst durch ein Verfahren bei dem zwischen einer als Anode geschalteten Elektrode und einer als Kathode geschalteten Werkstückoberfläche impulsartige, unipolare Lichtbogenentladungen gezündet und aufrechterhalten, wobei die Lichtbogenentladungen in einer Dauer, Anzahl und Geschwindigkeit aufeinanderfolgen, die nicht zu makroskopischen Aufschmelzungen der Werkstückoberfläche führen und ein vollständiges Erlöschen der einzelnen Lichtbogenentladung gewährleisten.

Die Aufgabe wird ebenfalls erfindungsgemäß gelöst durch eine Vorrichtung, wobei diese Vorrichtung aus einer Elektrode als Anode und einem Werkstück als Kathode besteht und weiterhin ein Generator oder ein Bauteil für die Erzeugung von elektrischen Impulsen vorhanden ist.

## Beschreibung

Die Erfindung bezieht sich auf die Gebiete des Maschinenbaus und der Metallurgie und betrifft ein Verfahren und eine Vorrichtung zur Modifizierung von metallischen Werkstückoberflächen durch elektrische Entladungen, wie sie z.B. für ein anschließendes adhäsives Fügen, wie beispielsweise Kleben oder Schweißen, oder für kombinierte Fügeverfahren, wie beispielsweise Kleb- Widerstandsschweißverbindungen oder Kleb- Umformverbindungen, vorteilhaft angewendet werden können.

Bei der Verklebung von metallischen Oberflächen in der industriellen Fertigung tritt eine Reihe von Problemen auf. Die wichtigste Voraussetzung für eine fest haftende Klebung besteht darin, daß die Klebstoffmoleküle so dicht an die Substratoberfläche gelangen können, daß die Adhäsionskräfte wirksam werden können. Darum müssen Metalloberflächen von Verunreinigungen (Fette, Öle, Staub und Schmutz) befreit werden. Dem schließen sich mechanische (Bürsten, Strahlen) und häufig auch chemische Vorbehandlungen an.

Wegen der hohen damit erzielbaren Langzeitstabilität ist das klassische Chrom-Schwefelsäure-Anodisieren für Aluminiumlegierungen seit Jahrzehnten weitgehend unverändert beibehalten worden. Dies ist insbesondere in der Luftfahrtindustrie der Fall. Um die Klebungen stabiler gegen Umwelteinflüsse zu machen und vor allem die durch eindiffundierendes Wasser ausgelösten Adhäsionsbrüche zu verhindern, wurden Primersysteme als Haftvermittler entwickelt, die in sehr dünnen Schichten aufgetragen werden, um das Gesamtverhalten der Verbindung nicht zu verschlechtern. Bei der Verbindung von Aluminiumteilen dominieren seit den fünfziger Jahren als Klebstoffe Epoxidharze, die bei Temperaturen um 120° C und bei relativ geringen Anpreßdrücken (etwa 1 bar) aushärten. Für die Verklebung von Stahlblechen in der Autoindustrie sind Spezialklebstoffe entwickelt worden, die für die automatische Fertigung geeignet, medizinisch unbedenklich und auch begrenzt ölverträglich sind.

Trotz des insgesamt sehr hohen technologischen Entwicklungsstandes der industriellen Klebtechnik bestehen immer noch einige wesentliche Defizite. So umfaßt die Vorbehandlung meist mehrere aufwendige Arbeitsschritte, und es werden teilweise medizinisch bedenkliche oder aus Umweltaspekten problematische Chemikalien eingesetzt. Darüber hinaus sind viele technologische Lösungen, die sich im Fertigungsprozeß bewährt haben, nicht auf den Reparaturbereich übertragbar.

Alternativ zu den rein chemischen Verfahren werden auch chemisch-physikalische Oberflächenbehandlungsverfahren angewandt, die in Bezug auf ihre Umweltverträglichkeit vielfach im Vorteil sind. Hier ist in erster Linie das unter dem Namen SACO bekannt gewordene Verfahren der Strahlbeschichtung (O. Hahn, B. Motzko; Einfluß der Prozeßparameter der SACO-Oberflächenbehandlung auf die Eigenschaften von geklebten Edelstahlverbindungen, Tagungsband Swissbonding 1994) zu nennen. Als Strahlmittel wird beim SACO-Verfahren ein Korundkorn verwendet, das mit einer silicatischen Schicht umhüllt ist. Beim Aufprall dieses Strahlmittels auf der zu behandelnden Substratoberfläche wird ein Teil der kinetischen Energie in Wärme umgesetzt, der silicatische Überzug des Korundkorns platzt teilweise von diesem ab und wird im bestrahlten Substrat fest verankert. Vorteil dieses Verfahrens ist, daß die Adhäsion zum Klebstoff weitgehend unabhängig vom Fügeteilwerkstoff ist, da sie durch die silicatische Zwischenschicht vermittelt wird. Somit lassen sich auch Werkstoffe, die herkömmlich schlecht verklebbar sind, gut miteinander verbinden.
Problematisch bei diesem Verfahren ist die, für einen Strahlprozeß immanente Staubentwicklung, die spezielle Arbeitsschutzmaßnahmen (Partikelgröße 1 bis 10 µm) notwendig macht. Diese Vorbehandlung erfordert also spezielle Abschirmungen, was ihre Nutzung für Reparaturen erschwert und eine Integration in automatisierte Produktionsabläufe unmöglich macht.

Verfahren zur Modifikation der Oberflächen metallischer Werkstücke mittels elektrischer Entladungen unter Atmosphärendruck sind in der Literatur verschiedentlich beschrieben und für verschiedene Anwendungsfälle vorgeschlagen worden.

Während die Vorgänge auf der Kathode einer Vakuumbogenentladung seit langem untersucht wurden (L. P. Harris, Arc Cathode Phenomena, in J. M. Lafferty (Editor) Vacuum Arcs, Theory and Application, Wiley, NY, 1980 ) und auch Gleichstrombögen an Luft vielfältigen Einsatz gefunden haben (Schweißtechnik, Schalter) sind die bei kurzzeitigen Bogenentladungen in Gasatmosphäre im Kathodenansatzpunkt ablaufenden Prozesse bisher nur wenig untersucht worden. Solche Entladungen kurzer Dauer zeichnen sich dadurch aus, daß sich auf der Kathode kein makroskopischer schmelzflüssiger Bogenansatzpunkt ausbilden kann und das Erscheinungsbild der Kathodenerosion durch die gleichen mikroskopischen Krater charakterisiert ist wie beim Vakuumbogen. Dabei treten in Abhängigkeit vom Oberflächenzustand verschiedene charakteristische Erosionsbilder auf (A. E. Guile and B. Jüttner, Basic Erosion Processes of Oxidized and Clean Metal Cathodes by Electric Arcs, IEEE Trans. Plasma Sci. Vol. PS-8, (1980), pp. 259-269). In Abhängigkeit von Gasart und Entladungsdauer verringert sich mit zunehmendem Gasdruck die Nettoerosion (J.-L. Meunier and M. G. Drouet, Experimental Study of the Effect of Gas Pressure on Arc Cathode Erosion and Redeposition in He, Ar, and SF from Vacuum to Atmospheric Pressure, IEEE Trans. Plasma Sci. Vol.PS-15, (1987), pp. 515-519). Weiterhin wurde beobachtet, daß sich unter dem Einfluß von kurzzeitigen Bogenentladungen eine amorphe Schicht ausbildet, deren Korrosionsbeständigkeit deutlich höher ist, als die des Grundmaterials (Larikov L.N. et al.; The formation of an Amorphous Layer on Fe₈₆B₁₄ alloy under the effect of a spark discharge; Metals Abstracts, vol. 16, Apr. 1983, p. 183, N° 56-0373.; Metallofizika, 6 (1982) 4, 92-93.). Technische Anwendungen, insbesondere für die Klebtechnik wurden aus den aufgeführten physikalischen Untersuchungen bisher nicht abgeleitet.

In US 4,931,613 wird ein Verfahren beschrieben, mit Hilfe elektrischer Entladungen die Festigkeitseigenschaften siliciumhaltiger Stähle zu verbessern. Dabei wird die Bearbeitungselektrode immer in Kontakt mit dem Werkstück gehalten, um mittels einer gepulsten Stromquelle eine Vielzahl von Entladungen auszulösen. Bei dieser Entladungsführung ist damit zu rechnen, daß auch die Bearbeitungselektrode stark erodiert wird und Material von dieser auf das Werkstück übertragen wird.

In DE 36 18 412 A1 wird ein Verfahren zur Behandlung von Objekten unter Anwendung von elektrischen Hochspannungsentladungen beschrieben, wobei das Ziel darin besteht, Gasbestandteile mittels des elektrischen Feldes der Entladung auf die Oberfläche des Objektes zu beschleunigen. Es handelt sich bei diesem Verfahren also um eine chemische Behandlung der Werkstückoberfläche mittels des elektrisch aktivierten Gases (Ozon, Radikale, Ionen), bei der die Kraterbildung eher als Störeffekt zu betrachten ist. Weiterhin ist hier störend, daß bei einer derartigen Behandlung gesundheitsschädliche Nebenprodukte (vor allem NOₓ, O₃) in großen Mengen gebildet werden.

In DE 42 25 106 A1 wird ein Verfahren zur Herstellung eines Metall Kunststoff-Verbundes insbesondere für die Dentalprothetik angegeben, wobei auf einem metallischen Teil eine haffvermittelnde Oxidschicht aufgebaut wird, die dann mit einem Dentalkunststoff über eine Zwischenschicht aus einem Haftsilan verbunden wird. Dabei wird zwischen dem metallischen Teil und einer benachbarten Elektrode eine elektrische Spannung aufrechterhalten und Funkenentladungen ausgelöst, während eine siliciumorganische Verbindung in den Raum zwischen der Elektrode und dem Teil eingeleitet wird. Auch bei diesem Verfahren steht die elektrochemische Beschichtung im Mittelpunkt, während sich eventuell bildende Aufrauhungen eher als Störeffekt zu betrachten sind.

Diese haftvermittelnden Schichten auf der Basis Siliciumoxid können nach DE 34 03 894 C1 auch dadurch bei hoher Temperatur auf einem metallischen Dentalprothesenteil erzeugt werden, indem eine sich in gasförmigem Zustand befindliche oxidierbare Siliciumverbindung mit einem Flammpyrolysebrenner zersetzt wird. Dabei wird der Flammkegel des Brenners über das zu beschichtende Dentalprothesenteil geführt.

In DE 40 12 086 A1 wird auf der gleichen Basis ein Verfahren beschrieben, das aber eine haftvermittelnde Schicht für die kathodische Elektrotauchlackierung erzeugen soll. Hier werden als Substratwerkstoffe neben Eisen auch Zink, Aluminium und deren Legierungen genannt. Mit der zusätzlich noch aufgebrachten Silanhaftvermittlerschicht trägt das Verfahren den Namen Silicoaterverfahren.

Haftvermittler ganz anderer Art für Aluminiumklebstoffe und das heißt auch für Aluminiumwerkstoffe werden in DE 43 03 077 A1 aufgeführt. Als Erfindung werden Haftvermittler beantragt, die mit Aluminiumionen einen Chelatkomplex bilden und eine mit einem Epoxidharz-Klebstoff reagierende Gruppe tragen.

Nachteilig ist bei allen Verfahren die Haftvermittler benutzen, daß es sich um komplizierte mehrstufige Prozesse handelt (Reinigung, Oxidbildung, Silanauftrag), bei denen in jeder Etappe umweltschädliche und giftige bzw. gesundheitsschädliche Stoffe benutzt oder als Nebenprodukte freigesetzt werden.

Die Aufgabe der Erfindung besteht darin, ein Verfahren und eine Vorrichtung zur Modifizierung von metallischen Werkstückoberflächen durch elektrische Entladungen anzugeben, durch das ein mehrstufiger Prozeß der Oberflächenmodifizierung vermieden werden kann und die Modifizierung ohne den Einsatz von umweltschädlichen, giftigen und/oder gesundheitsschädlichen Stoffen erfolgt.

Die Aufgabe wird durch die in den Ansprüchen angegebenen Erfindungen gelöst.

Erfindungsgemäß werden bei einem Verfahren zur Modifizierung von metallischen Werkstückoberflächen durch elektrische Entladungen als Vorbehandlung für nachfolgende adhäsive Füge- und/oder kombinierte Fügetechnologien zwischen einer als Anode geschalteten Elektrode und einer Werkstückoberfläche, wobei das Werkstück als Kathode geschaltet ist, impulsartige, unipolare Lichtbogenentladungen gezündet und aufrechterhalten, wobei die Dauer einer Lichtbogenentladung jeweils nicht zu einer makroskopischen Aufschmelzung der Werkstückoberfläche führt, und wobei die Lichtbogenentladungen in einer Anzahl und Geschwindigkeit aufeinanderfolgen, die nicht zu makroskopischen Aufschmelzungen der Werkstückoberfläche führen und ein vollständiges Erlöschen der einzelnen Lichtbogenentladung gewährleisten.

Vorteilhafterweise werden zwischen der Elektrode und einer Teilfläche der Werkstückoberfläche, die für die nachfolgende adhäsive Füge- und/oder kombinierte Fügetechnologie benötigt wird, die Lichtbogenentladungen gezündet und aufrechterhalten.

Es ist auch vorteilhaft, daß bei Atmosphärendruck und unter Einsatz von aktiven oder inerten Gasen oder Gasgemischen gearbeitet wird.

Die Aufgabe wird ebenfalls erfindungsgemäß gelöst durch eine Vorrichtung zur Modifizierung von metallischen Werkstückoberflächen durch elektrische Entladungen als Vorbehandlung für nachfolgende adhäsive Füge- und/oder kombinierte Fügetechnologien, wobei diese Vorrichtung aus einer Elektrode als Anode und einem Werkstück als Kathode besteht und weiterhin ein Generator, bestehend aus einer Hochspannungsimpulsquelle und einer Impulsstromquelle, oder ein Bauteil, bestehend aus einem Laser und einer Impulsstromquelle, für die Erzeugung von elektrischen Impulsen für die Zündung und Aufrechterhaltung von impulsartigen, unipolaren Lichtbogenentladungen zwischen der Elektrode und der Werkstückoberfläche vorhanden ist.

Zweckmäßig ist es, wenn bei dem Generator die Hochspannungsimpulsquelle über eine Diode und die Impulsstromquelle über eine weitere Diode mit der Elektrode verbunden sind.

Eine vorteilhafte Variante der Erfindung besteht darin, daß ein gepulster Laser und eine Impulsstromquelle eingesetzt sind, wobei der Laser auf die Werkstückoberfläche gegenüber der Elektrode gerichtet fokussiert ist.

Entsprechend einer ebenfalls vorteilhaften Ausgestaltung der erfindungsgemäßen Vorrichtung ist der Krümmungsradius der als Anode geschalteten Elektrode wesentlich kleiner als der der gegenüberliegenden Werkstückoberfläche.

Gemäß einer weiteren vorteilhaften Ausgestaltung der erfindungsgemäßen Vorrichtung herrscht im Bearbeitungsraum ein Gasdruck größer 100 Pa.

Besondere Vorteile ergeben sich, wenn im Bearbeitungsraum Atmosphärendruck herrscht.

Die erfindungsgemäße Vorrichtung ist in vorteilhafter Weise auch dahingehend ausgestaltet, wenn der Bearbeitungsraum von einem Gas durchspült wird.

Vorteile ergeben sich auch dann, wenn bei der erfindungsgemäßen Vorrichtung das Spülgas durch eine Öffnung in der als Anode geschalteten Elektrode in den Bearbeitungsraum eintritt.

Die Wirkung der erfindungsgemäßen Lösung entsteht dadurch, daß zur Modifizierung einer metallischen Werkstückoberfläche nur impulsartige, unipolare (also keine oszillierenden) Entladungen benutzt werden, wobei die Elektrode mit dem positiven Pol einer gepulsten Spannungsquelle verbunden ist. Unter unipolarer Entladung wird dabei verstanden, daß der Strom während des gesamten Entladungsvorganges im wesentlichen in eine Richtung fließt, also keine Umkehr der Stromrichtung stattfindet, und daß der Strom, der in Gegenrichtung fließt, sehr klein ist, gegenüber dem Strom in der Hauptrichtung.
Es hat sich gezeigt, daß bei einer derartigen Beschaltung und Benutzung kurzer gepulster Lichtbogenentladungen (Dauer 5 ... 100 µs) im wesentlichen die Werkstückoberfläche und nicht oder in nur sehr geringem Maße die Elektrode erodiert wird. Weiterhin hat die kurzzeitige Pulsung zur Folge, daß der Wärmeeintrag in das Werkstück gering bleibt. Die Entladungen bewirken eine lokale Aufrauhung der Werkstückoberfläche. Durch diese Aufrauhung wird erreicht, daß sich die wirksame Oberfläche vergrößert und damit die Haftung von z.B. Klebstoffen verbessert werden kann. Es konnte festgestellt werden, daß dieser Effekt in vorteilhafter Weise ausgeprägt ist, wenn die Behandlung unter Einfluß eines Gases erfolgt, wobei je nach verwendetem Klebstoff und zu verklebendem Material ein passives Gas (z. B. ein Edelgas oder Stickstoff) oder ein die Oberfläche aktivierendes Gas (z. B. Sauerstoff) oder ein Gasgemisch (eine halogenhaltige Mischung) eingesetzt werden kann. Wenn die Lichtbogenentladungen mittels Hochspannungsdurchschlag gezündet werden, beginnt die Entladung vorzugsweise an dielektrischen Einschlüssen, welche somit auch bevorzugt beseitigt werden. Da gerade solche, oft schlecht an der Oberfläche haftenden Fremdstoffe bei der Verklebung stören, wird der erwünschte Effekt noch verstärkt.

Durch die erfindungsgemäße Vorrichtung und das erfindungsgemäße Verfahren zur Modifizierung einer metallischen Werkstückoberfläche mit impulsartigen, unipolaren Lichtbogenentladungen wird eine feine, gleichmäßige Aufrauhung erzeugt, die eine Modifikation der Kristallstruktur im Oberflächenbereich des Werkstückes darstellt. Dadurch wird in einem Verfahrensschritt und ohne Einsatz von umweltschädlichen, giftigen und/oder gesundheitsschädlichen Stoffen eine saubere und oxidfreie Oberfläche der behandelten metallische Werkstücke erzeugt, die für anschließende adhäsive Füge- und/oder kombinierte Fügetechnologien eine besonders vorteilhafte Wirkung hat.
Durch das beschriebene erfindungsgemäße Verfahren mit der erfindungsgemäßen Vorrichtung wird die Festigkeit von adhäsiven Fügeverbindungen, insbesondere Klebverbindungen, verbessert. Insbesondere verbessert sich die Langzeitbeständigkeit solcher Fügeverbindungen.
Weitere Vorteile des erfindungsgemäßen Verfahrens und der erfindungsgemäßen Vorrichtung bestehen darin,
- daß die Modifizierung in einem Arbeitsgang erfolgt, wobei die Bearbeitungsdauer dem Verschmutzungsgrad angepaßt werden kann,
- daß die Modifizierung sowohl vollautomatisch, z.B. mittels Manipulatoren, als auch mit einem Handgerät nach Sicht erfolgen kann,
- daß die Modifizierung bei Atmosphärendruck ausgeführt werden kann (kein Vakuumverfahren notwendig),
- daß wegen des sehr geringen und auf eine wenige Mikrometer dicke Oberflächenschicht begrenzten Energieeintrages die modifizierten Werkstücke im ganzen kalt bleiben,
- daß modifizierte und unmodifizierte oder nicht ausreichend modifizierte Bereiche der jeweiligen Werkstückoberfläche mit unbewaffnetem Auge deutlich unterscheidbar sind,
- daß die Modifizierung lokal an den für das nachfolgende Fügeverfahren relevanten Bereichen der Werkstücke erfolgen kann, ohne daß eine Beeinflussung der umgebenden Bereiche eintritt.

Im weiteren wird die Erfindung an mehreren Ausführungsbeispielen näher erläutert.

### Beispiel 1

Über ein Werkstück aus einer Aluminiumlegierung wird in konstantem Abstand von ca. 2 mm eine Spitzenelektrode mit axialer Bohrung bewegt. Aus der Öffnung der Spitzenelektrode strömt N₂ über die Oberfläche des Werkstückes. Eine Hochspannungsimpulsquelle erzeugt kurze Hochspannungsimpulse (< 1 µs) die dazu führen, daß sich die aufgeladene Impulsstromquelle (Strom 50 A, Impulsdauer 20 µs) zwischen Werkstück und Spitzenelektrode entlädt. Zwei Dioden sorgen dafür, daß der Hochspannungsimpuls nicht die Impulsstromquelle beeinflußt und daß die Entladung impulsartig und unipolar verläuft, wobei das Werkstück immer Kathode und die Spitzenelektrode immer Anode ist. Nachdem die Entladung erloschen ist, wird die Impulsstromquelle erneut aufgeladen. Nach einer Pause von etwa 10 ms wird der nächste Hochspannungsimpuls und damit die nächste Entladung ausgelöst. Währenddessen wird das Werkstück langsam weiterbewegt, so daß der gesamte Bereich, der zum Kleben vorbehandelt werden soll, gleichmäßig modifiziert wird. Es werden etwa 5.000 Entladungen je cm² ausgelöst. Die Bewegung des Werkstückes, die Hochspannungsimpulsauslösung, wie auch der Nachladevorgang der Impulsstromquelle werden von einem Prozeßrechner gesteuert

Der Versuch ergab, daß die Werkstückoberfläche homogen aufgerauht war und dünne nichtmetallische Schichten (Ölrückstände, Oxide und andere Verunreinigungen) vollständig beseitigt worden sind.
Weiterhin zeigte sich, daß die modifizierte Werkstückoberfläche trotz der Vergrößerung der Oberfläche durch die Aufrauhung korrosionsbeständiger ist als unmodifizierte und daß es möglich ist, hochfeste Klebverbindungen ohne irgendeine andere Vorbehandlung herzustellen. Auch eine vorherige Entfettung erwies sich als unnötig.

### Beispiel 2

Es besteht die Aufgabe ein Stahlblech als Werkstück, welches mit einem vom vorhergehenden Bearbeitungsschritt herrührenden dünnen Überzug von Tiefziehöl (Dicke des Ölfilmes ca. 1 ... 5 µm) bedeckt ist, in einem Arbeitsschritt zu reinigen und gleichzeitig zur Verklebung vorzubehandeln. Dazu wird über dem zu bearbeitenden Bereich des Werkstückes in konstantem Abstand von ca. 2 mm eine Spitzenelektrode mit axialer Bohrung bewegt. Aus der Öffnung der Spitzenelektrode strömt Argon über die Oberfläche des Werkstückes. Ein Nd·YAG-Impulslaser erzeugt kurze Strahlungsimpulse (Wellenlänge 1,06 µm, Impulsdauer 90 ns, Pulsenergie 10 mJ) die auf die Werkstückoberfläche fokussiert werden, wobei der Brennpunkt auf die Werkstückoberfläche genau unterhalb der Spitzenelektrode gerichtet ist. Durch die fokussierte Laserstrahlung wird eine Entladung zwischen der Spitzenelektrode und dem Werkstück gezündet, so daß sich die Impulsstromquelle (Ladespannung 500 V, Impedanz 10 Ω, Stromdauer 50 µs) zwischen Werkstück und Spitzenelektrode entlädt, wobei das Werkstück immer Kathode ist. Nachdem die Entladung erloschen ist, wird die Impulsstromquelle erneut aufgeladen. Nach einer Pause von 7 ms wird der nächste Laserimpuls und damit die nächste Entladung ausgelöst. Währenddessen wird das Werkstück langsam weiterbewegt, so daß der gesamte Bereich, der gereinigt und zum Kleben vorbehandelt werden soll, gleichmäßig behandelt wird. Dazu werden 10.000 Entladungen je cm² ausgelöst. Die Bewegung des Werkstückes, die Impulsauslösung wie auch der Nachladevorgang der Impulsstromquelle werden von einem Prozeßrechner gesteuert.

Der Versuch ergab, daß die Werkstückoberfläche homogen aufgerauht war und die Tiefziehölrückstände vollständig beseitigt worden sind.

## Patentansprüche

1. Verfahren zur Modifizierung von metallischen Werkstückoberflächen durch elektrische Entladungen als Vorbehandlung für nachfolgende adhäsive Füge- und/oder kombinierte Fügetechnologien dadurch gekennzeichnet, daß zwischen einer als Anode geschalteten Elektrode und einer Werkstückoberfläche, wobei das Werkstück als Kathode geschaltetet ist, impulsartige, unipolare Lichtbogenentladungen gezündet und aufrechterhalten werden, wobei die Dauer einer Lichtbogenentladung jeweils nicht zu einer makroskopischen Aufschmelzung der Werkstückoberfläche führt, und wobei die Lichtbogenentladungen in einer Anzahl und Geschwindigkeit aufeinanderfolgen, die nicht zu makroskopischen Aufschmelzungen der Werkstückoberfläche führen und ein vollständiges Erlöschen der einzelnen Lichtbogenentladung gewährleisten.

2. Verfahren nach Anspruch 1, dadurch gekennzeichnet, daß zwischen der Elektrode und einer Teilfläche der Werkstückoberfläche, die für die nachfolgenden adhäsive Füge- und/oder kombinierte Fügetechnologie benötigt wird, die Lichtbogenentladungen gezündet und aufrechterhalten werden.

3. Verfahren nach Anspruch 1, dadurch gekennzeichnet, daß bei Atmosphärendruck und unter Einsatz von aktiven oder inerten Gasen oder Gasgemischen gearbeitet wird.

4. Vorrichtung zur Modifizierung von metallischen Werkstückoberflächen durch elektrische Entladungen als Vorbehandlung für nachfolgende adhäsive Füge- und/oder kombinierte Fügetechnologien dadurch gekennzeichnet, daß diese Vorrichtung aus einer Elektrode als Anode und einem Werkstück als Kathode besteht und weiterhin ein Generator, bestehend aus einer Hochspannungsimpulsquelle und einer Impulsstromquelle, oder ein Bauteil, bestehend aus einem Laser und einer Impulsstromquelle, für die Erzeugung von elektrischen Impulsen für die Zündung und Aufrechterhaltung von impulsartigen unipolaren Lichtbogenentladungen zwischen der Elektrode und der Werkstückoberfläche vorhanden ist.

5. Vorrichtung nach Anspruch 4, dadurch gekennzeichnet, daß bei dem Generator die Hochspannungsimpulsquelle über eine Diode und die Impulsstromquelle über eine weitere Diode mit der Elektrode verbunden sind.

6. Vorrichtung nach Anspruch 4, dadurch gekennzeichnet, daß ein gepulster Laser und eine Impulsstromquelle eingesetzt sind, wobei der Laser auf die Werkstückoberfläche gegenüber der Elektrode gerichtet fokussiert ist.

7. Vorrichtung nach Anspruch 4, dadurch gekennzeichnet, daß der Krümmungsradius der als Anode geschalteten Elektrode wesentlich kleiner ist, als der der gegenüberliegenden Werkstückoberfläche.

8. Vorrichtung nach Anspruch 4, dadurch gekennzeichnet, daß im Bearbeitungsraum ein Gasdruck größer 100 Pa herrscht.

9. Vorrichtung nach Anspruch 4, dadurch gekennzeichnet, daß im Bearbeitungsraum Atmosphärendruck herrscht.

10. Vorrichtung nach Anspruch 4, dadurch gekennzeichnet, daß der Bearbeitungsraum von einem Gas durchspült wird.

11. Vorrichtung nach Anspruch 10, dadurch gekennzeichnet, daß das Spülgas durch eine Öffnung in der als Anode geschalteten Elektrode in den Bearbeitungsraum eintritt.
